# EUROPEAN PATENT APPLICATION

(11) **EP 4 068 691 A1**
(43) Date of publication of application: **05.10.2022**
(21) Application number: 21210395.6
(22) Date of filing: 25.11.2021
(51) Int. Cl.: H04L 12/18

(54) **METHOD AND APPARATUS FOR CREATING GROUP**

(30) Priority: 31.03.2021 CN 202110352024
(71) Applicant: Beijing Dajia Internet Information Technology Co., Ltd., Haidian District Beijing 100085 (CN)
(72) Inventor: HUANG, Yuanyuan, Beijing, 100085 (CN); XU, Yang, Beijing, 100085 (CN)
(74) Representative: Yang, Shu

(57) **Abstract**

A method for creating a group is provided. The method includes: displaying (S201) a schedule creation interface; displaying (S202) target schedule information on the schedule creation interface, and creating (S203) a target schedule and a target group associated with the target schedule in response to a trigger operation on a schedule create control and a group create control being in a triggered state.

## Description

### TECHNICAL FIELD

The present disclosure relates to the field of Internet technologies, and in particular relates to a method for creating a group and an apparatus.

### BACKGROUND

With the development of internet technologies, users can communicate with one another conveniently and efficiently through instant communication applications. Creating a group is an effective method for communication among a plurality of users. Groups are often created when users need to communicate with other users.

### SUMMARY

The embodiments of the present disclosure provide a method for creating a group and an apparatus.

According to one aspect of the embodiments of the present disclosure, a method for creating a group is provided. The method includes:
displaying a schedule creation interface, wherein a schedule create control is displayed on the schedule creation interface and is configured to instruct to create a schedule, and a group create control is displayed on the schedule creation interface and is configured to instruct to create a group corresponding to the schedule in response to creating the schedule and the group create control being in a triggered state;
displaying target schedule information on the schedule creation interface, wherein the target schedule information includes a plurality of accounts participating in a schedule event; and
creating a target schedule and a target group associated with the target schedule in response to a trigger operation on the schedule create control and the group create control being in the triggered state, wherein the target schedule indicates the schedule event in which the plurality of accounts participate, and the target group includes the plurality of accounts.

According to another aspect of the embodiments of the present disclosure, an apparatus is provided. The apparatus includes:
an interface displaying unit, configured to display a schedule creation interface, wherein a schedule create control is displayed on the schedule creation interface and is configured to instruct to create a schedule, and a group create control is displayed on the schedule creation interface and is configured to instruct to create a group corresponding to the schedule in response to creating the schedule and the group create control being in a triggered state;
an information acquiring unit, configured to display target schedule information on the schedule creation interface, wherein the target schedule information includes a plurality of accounts participating in a schedule event; and
a creating unit, configured to create a target schedule and a target group associated with the target schedule in response to a trigger operation on the schedule create control and the group create control being in the triggered state, wherein the target schedule indicates the schedule event in which the plurality of accounts participate, and the target group includes the plurality of accounts.

According to still another aspect of the embodiments of the present disclosure, an electronic device is provided. The electronic device includes:
at least one processor; and
a memory configured to store at least one program,
wherein the at least one processor, when running the at least one program, is caused to perform the method for creating a group described in the above aspect of embodiments of the disclosure.

According to still another aspect of the embodiments of the present disclosure, a non-transitory computer-readable storage medium storing at least one instruction therein is provided. Wherein the at least one instruction, when executed by a processor of an electronic device, causes the electronic device to perform the method for creating a group described in the above aspect of embodiments of the disclosure.

According to still another aspect of the embodiments of the present disclosure, a computer program product including at least one computer program is provided. The at least one computer program, when executed by a processor, causes the processor to perform the method for creating a group described in the above aspect of embodiments of the disclosure.

:

With the method for creating the group is provided according to the embodiments of the present disclosure, the group create control is provided on the schedule creation interface, such that when creating a schedule, a user can create a group associated with the schedule through the group create control, eliminating the step of creating a group for a plurality of accounts participating in a schedule event corresponding to the schedule upon creation of the schedule, and improving the efficiency of creating a group

### BRIEF DESCRIPTION OF THE DRAWINGS

FIG. 1 is a schematic diagram of an implementation environment of a method for creating a schedule according to some embodiments of the present disclosure;
FIG. 2 is a flowchart of a method for creating a group according to some embodiments of the present disclosure;
FIG. 3 is a flowchart of another method for creating a group according to some embodiments of the present disclosure;
FIG. 4 is a schematic diagram of a schedule creating interface according to some embodiments of the present disclosure;
FIG. 5 is a schematic diagram of another schedule creating interface according to some embodiments of the present disclosure;
FIG. 6 is a schematic diagram of a group chat interface according to some embodiments of the present disclosure;
FIG. 7 is a schematic diagram of a schedule detail interface according to some embodiments of the present disclosure;
FIG. 8 is a block diagram of an apparatus for creating a group according to some embodiments of the present disclosure;
FIG. 9 is a block diagram of a terminal according to some embodiments of the present disclosure; and
FIG. 10 is a block diagram of a server according to some embodiments of the present disclosure.

### DETAILED DESCRIPTION

User information in the present disclosure may be authorized by a user or sufficiently authorized by all parties.

In embodiments of the present disclosure, an electronic device can be provided as a terminal or a server. In the case that the electronic device is provided as a terminal, the terminal implements operations of a method for creating a group according to the embodiments of the present disclosure. In the case that the electronic device is provided as a server, the server interacts with a terminal to implement operations of the method for creating a group according to the embodiments of the present disclosure. For example, the terminal sends a schedule creation request to the server; and the server acquires target schedule information uploaded by the terminal, and feeds back data of a created group to the terminal for display by the terminal.

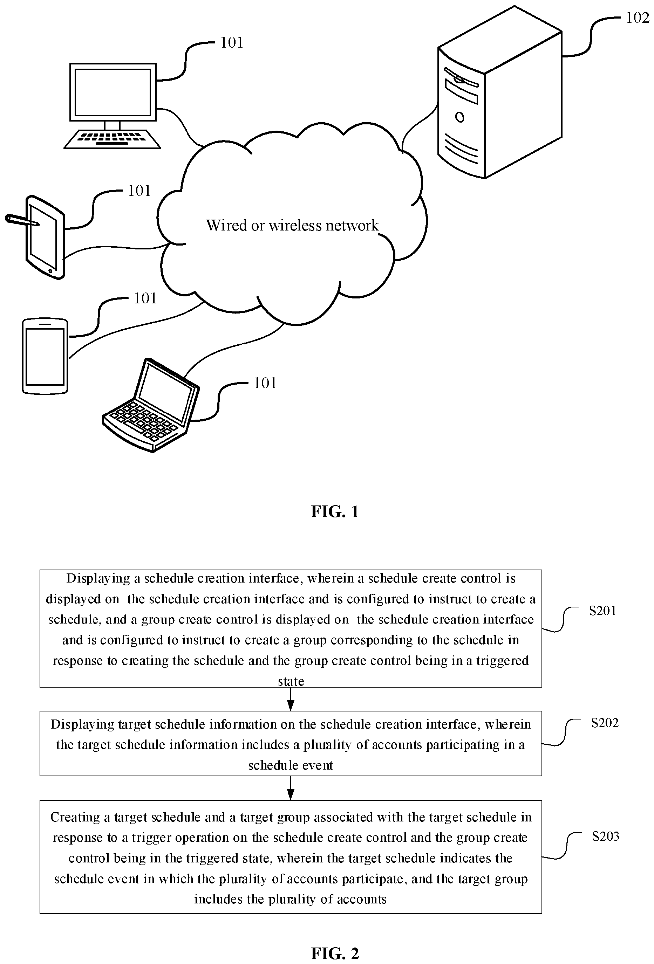

FIG. 1 is a schematic diagram of an implementation environment of a method for creating a schedule according to an embodiment of the present disclosure. For example, the electronic device is provided as a terminal, as shown in FIG. 1, the implementation environment specifically includes a terminal 101 and a server 102.

In some embodiments, the terminal 101 includes at least one of a smartphone, a smartwatch, a desktop computer, a portable computer, a laptop computer, and other devices. An application having an instant messaging function is installed and run on the terminal 101. A user can acquire an instant messaging service provided by the application by logging into the application through the terminal 10. In some embodiments, the terminal 101 is connected to the server 102 over a wired or wireless network.

In some embodiments, the terminal 101 refers to one of a plurality of terminals. The embodiments are only described by taking the terminal 101 as an example. Those skilled in the art may know that a quantity of the terminals 101 may be greater or less. For example, there may be several, tens of, hundreds of, or a greater quantity of the terminals 101. The quantity and device type of the terminals are not limited in the embodiments of the present disclosure.

In some embodiments, the server 102 is at least one of one server, a plurality of servers, a cloud computing platform, and a virtual center. The server 102 can be connected to the terminal 101 and another terminal over a wired or wireless network. The server 102 can receive a group creation request sent by the terminal 101, and send group information of a created target group to each account in the group. In some embodiments, the quantity of the above server can be greater or less. This is not limited in the embodiments of the present disclosure. The server 102 can further include another functional server, thereby providing more comprehensive and diverse services.

FIG. 2 is a flowchart of a method for creating a group according to some embodiments of the present disclosure. As shown in FIG. 2, taking the method for creating a group applied to an electronic device as an example, the method includes the following steps S201 to S203.

In step S201, the electronic device displays a schedule creation interface, wherein a schedule create control and a group create control are displayed on the schedule creation interface, the schedule create control is configured to instruct to create a schedule, and the group create control is configured to instruct to create a group corresponding to the schedule in response to creating the schedule and the group create control being in a triggered state.

In the embodiments of the present disclosure, the schedule create control and the group create control may be in a form of buttons, characters, pictures, or the like. This is not limited in the embodiments of the present disclosure. The group create control has an untriggered state and a triggered state. A user can change a state of the group create control by triggering the group create control. The electronic device displays different states of the group create control based on a detected trigger operation on the group create control.

In step S202, the electronic device displays target schedule information on the schedule creation interface, wherein the target schedule information includes a plurality of accounts participating in a schedule event.

In the embodiments of the present disclosure, the electronic device acquires, based on an input operation detected on the schedule creation interface, the target schedule information input by the user, and display the target schedule information.

In step S203, the electronic device creates a target schedule and a target group associated with the target schedule in response to a trigger operation on the schedule create control and the group create control being in the triggered state, wherein the target schedule indicates the schedule event in which the plurality of accounts participate, and the target group includes the plurality of accounts.

In the embodiments of the present disclosure, in response to the electronic device detecting that the schedule create control is triggered and the group create control is in the triggered state, and the electronic device can create both the target schedule and the target group. In response to the electronic device detecting that the schedule create control is triggered and that the group create control is in the untriggered state, the electronic device creates only the target schedule.

According to the method in the embodiments of the present disclosure, the group create control is provided on the schedule creation interface, such that when creating a schedule, a user can create a group associated with the schedule through the group create control, eliminating the step of creating a group for a plurality of accounts participating in a schedule event corresponding to the schedule upon creation of the schedule, and improving the efficiency of creating a group.

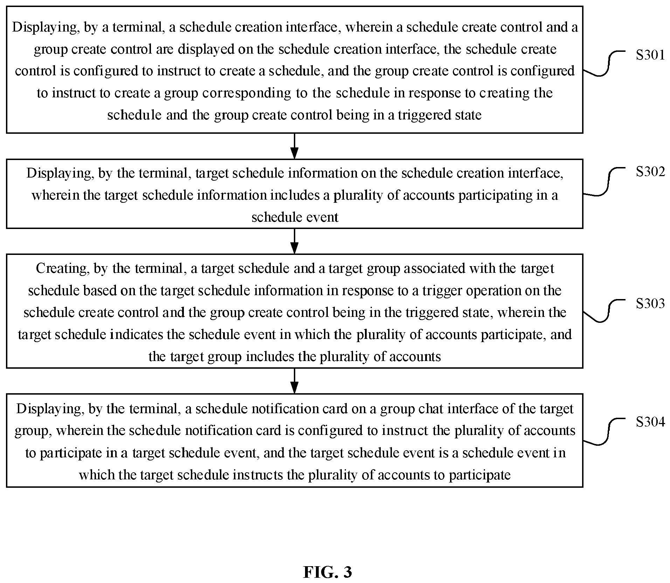

The above describes the flowchart, shown in FIG. 2, of the method for creating the group according to the embodiments of the present disclosure. The following further describes the solution in the embodiments of the present disclosure based on an application scenario. FIG. 3 is a flowchart of another method for creating a group according to an example embodiment. Taking the electronic device being provided as a terminal as an example, as shown in FIG. 3, the method for creating a group includes steps S301 to S304.

In step S301, the terminal displays a schedule creation interface, wherein a schedule create control and a group create control are displayed on the schedule creation interface, the schedule create control is configured to instruct to create a schedule, and the group create control is configured to instruct to create a group corresponding to the schedule in response to creating the schedule and the group create control being in a triggered state.

In the embodiments of the present disclosure, the terminal displays a schedule creation interface on which schedule-related information to be input is displayed, such as title information about of the schedule event, start time and end time information of the schedule event, conference room information of the schedule event, account information of a plurality of accounts participating in the schedule event, reminder time information of the schedule event, and initiator information of the schedule event. Content of the schedule-related information to be input is not limited in the embodiments of the present disclosure. In some embodiments, a schedule create control and a group create control are further displayed on the schedule creation interface. A user is capable of creating a schedule by triggering the schedule create control, and indicating, based on a triggering state of the group create control, whether the terminal creates a group corresponding to the schedule when creating the schedule. In the case that the group create control is in a triggered state when the terminal creates the schedule, the terminal creates the group. In the case that the group create control is in an untriggered state when the terminal creates the schedule, the terminal creates the schedule. By default, the group create control is in the untriggered state.

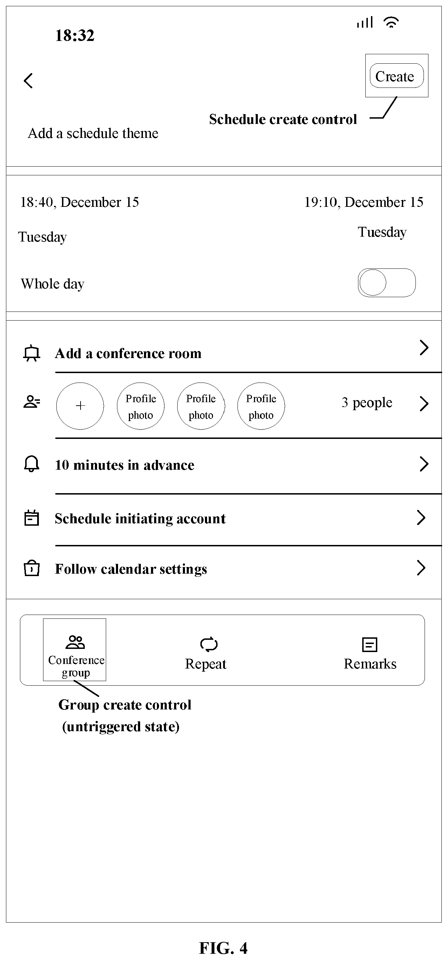

For example, referring to FIG. 4, FIG. 4 is a schematic diagram of a schedule creation interface according to some embodiments of the present disclosure. As shown in FIG. 4, the following to-be-input information are displayed on the schedule creation interface: add a schedule of theme, start time and end time of the schedule, add a conference room, a select accounts participating in a schedule event, and a reminder time of the schedule. A schedule create control and a group create control are further displayed on the schedule creation interface. In the illustrated example, the group create control is in an untriggered state.

In step S302, the terminal displays target schedule information on the schedule creation interface, wherein the target schedule information includes a plurality of accounts participating in a schedule event. In some embodiments, the target schedule information comprises a schedule event, location, time of the schedule event, a plurality of accounts participating in a schedule event and other information related to the event scheduling. The schedule creation interface allows the user to input the target schedule information and shows the target schedule information that has already been added.

In the embodiments of the present disclosure, the user inputs information such as a schedule theme on the schedule creation interface when creating the schedule. Accordingly, the terminal acquires the information input by the user as the target schedule information based on an input operation detected by the schedule creation interface. The target schedule information includes a plurality of accounts that are to participate in a schedule event. In some embodiments, the plurality of accounts further include an account added on the schedule creation interface by the user.

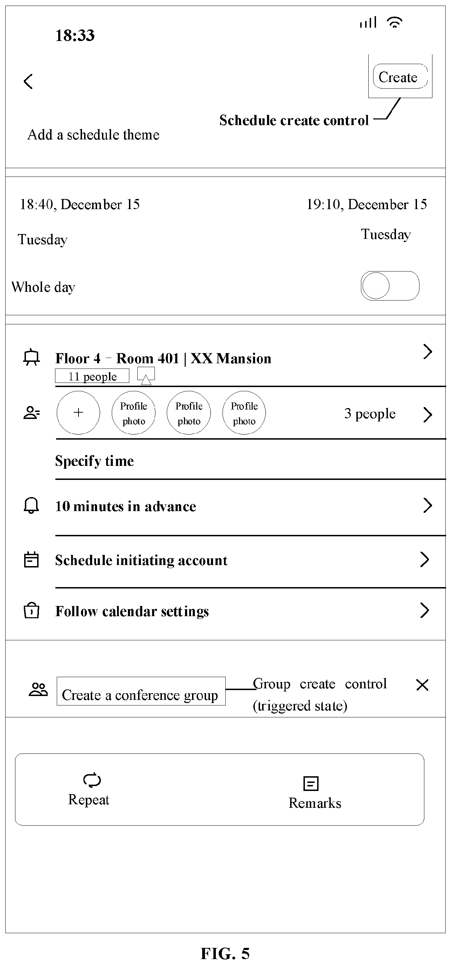

For example, referring to FIG. 5, FIG. 5 is a schematic diagram of another schedule creation interface according to some embodiments of the present disclosure. As shown in FIG. 5, information about a conference room (Floor 4 - Room 401 | Mansion XX) has been added on the schedule creation interface. That is, the illustrated schedule creation interface displays the added target schedule information about the location (e.g., conference room). The user can further enter the information to complete the input of the schedule information. FIG. 5 also shows that the group create control is in the triggered state. The user can update the state of the group create control from the triggered state to the untriggered state by triggering the group create control again.

In step S303, the terminal creates a target schedule and a target group associated with the target schedule based on the target schedule information in response to a trigger operation on the schedule create control and the group create control being in the triggered state, wherein the target schedule indicates the schedule event in which the plurality of accounts participate, and the target group includes the plurality of accounts.

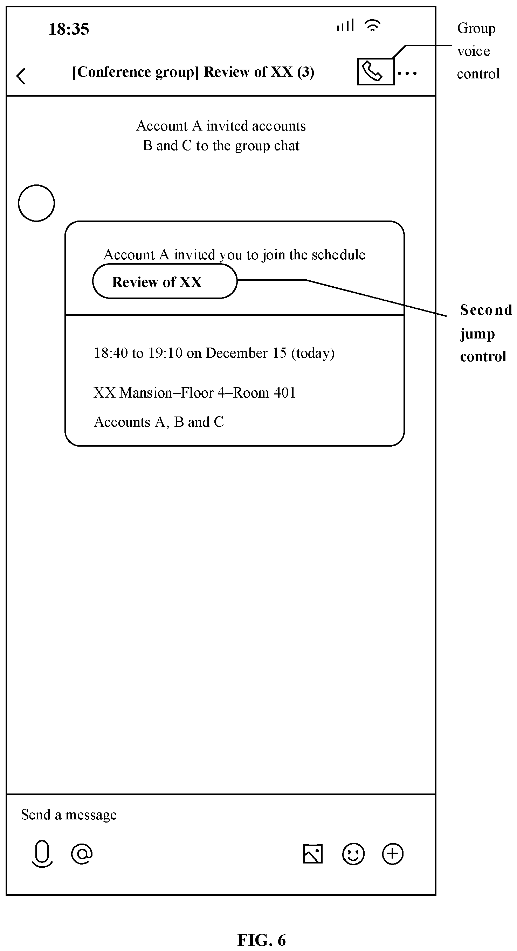

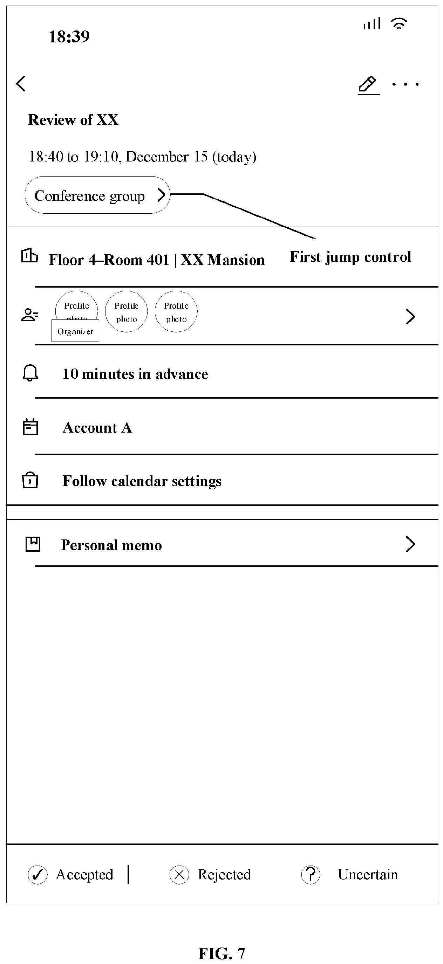

In the embodiments of the present disclosure, the user can instruct the terminal to create the schedule by triggering the schedule create control. The terminal determines a current state of the group create control in response to a trigger operation on the schedule create control. In response to the group create control being in the untriggered state, the terminal creates the target schedule. In response to the group create control being in the triggered state, the terminal creates both the target schedule and the target group. In some embodiment, the method for creating a group further comprises: displaying a schedule detail interface of the target schedule. A first jump control is display on a schedule detail interface of the target schedule (see the first jump control in FIG. 7 for example). The first jump control is configured to jump to a group chat interface of the target group in response to being triggered. In some embodiments, the second jump control is displayed on the group chat interface of the target group (see the second jump control in FIG. 6 for example). The second jump control is configured to jump to the schedule detail interface of the target schedule in response to being triggered. Determining whether to create the target group based on the current state of the group create control makes the creation of the target group controllable. In response to the group create control being in the triggered state, the target group is created when creating the target schedule, which can implement simultaneous creation of the target schedule and the target group. In addition, the first jump control is displayed on the schedule detail interface of the target schedule, and the second jump control is displayed on the group chat interface of the target group, such that the user can perform jumping between the schedule detail interface of the target schedule and the group chat interface of the target group, which indicates that the target schedule is associated with the target group. The first jump control and the second jump control are disposed, such that the user can perform seamless switching between the target schedule and the target group, eliminating the steps of exiting the schedule detail interface for searching a corresponding group, and entering a group chat interface of the group, thereby improving human-computer interaction efficiency.

In some embodiments, the terminal establishes an association relationship between the target schedule and the target group by determining a schedule identifier of the target schedule and a group identifier of the target group, and then establishing a correspondence between the schedule identifier and the group identifier. The correspondence between the schedule identifier of the target schedule and the group identifier of the target group is created, such that a one-to-one correspondence is established between the target schedule and the target group.

In some embodiments, in the case of creating the target group, the terminal may further detect whether a quantity of accounts included in the target schedule information meets a requirement. Correspondingly, steps of creating the target group by the terminal include: determining by the terminal a quantity of the plurality of accounts; and creating the target group including the plurality of accounts in response to the quantity being not less than a quantity threshold, wherein the quantity threshold is a positive integer not less than 3. In response to the quantity being less than the quantity threshold, creation failure information is displayed, wherein the creation failure information is configured to indicate that the quantity of accounts participating in a schedule event of the target schedule is less than a minimum quantity for creating a group and that the target group fails to be created. A quantity limit is set, such that a quantity of accounts in a group is within a certain range, and accounts of which a quantity is less than the quantity range can communicate with each other without creating a group. Therefore, resources spent on creating a group are reduced, and the utilization efficiency of an existing group is improved.

For example, a group needs to include at least three accounts, the quantity threshold is 3. In the case that the terminal determines that a quantity of accounts participating in the schedule event is less than 3, the terminal displays prompt information "Too few people to create a group". In the case that the terminal determines that the quantity of the accounts participating in the schedule event is not less than 3, the terminal creates a group.

In step S304, the terminal displays a schedule notification card on a group chat interface of the target group, wherein the schedule notification card is configured to instruct the plurality of accounts to participate in the schedule event in which the target schedule instructs the plurality of accounts to participate.

In the embodiments of the present disclosure, upon creation of the target group, the terminal notifies, on the group chat interface, each account in the group that the group has been created. For example, the terminal sends notification information on the group chat interface, wherein the notification information is configured to indicate that the group has been created. The terminal further displays the schedule notification card on the group chat interface of the target group, to instruct, in a form of the schedule notification card, each account in the target group to participate in the schedule event in which the target schedule instructs the plurality of accounts to participate. The schedule notification card is an entry of the target schedule. The user can view detailed information of the target schedule by clicking the schedule notification card. In some embodiments, the terminal displays a schedule detail interface of the target schedule in response to a trigger operation on the schedule notification card. The schedule notification card is displayed on the group chat interface to notify each account in the group, such that a user of each account can learn about a schedule event corresponding to the schedule through the schedule notification card, eliminating the step of entering a schedule detail interface to view the target schedule, and improving the efficiency of schedule viewing.

For example, FIG. 6 is a schematic diagram of a group chat interface according to some embodiments of the present disclosure. As shown in FIG. 6, a schedule notification card is displayed on the group chat interface to remind a user of a schedule initiator, a schedule name, start time and end time of a schedule event, and accounts participating in the schedule event. The group chat interface further includes a group name and a group voice control. The group voice control is configured to initiate a group voice message. The group name is generated by the terminal based on the schedule name, such that the user can visually learn an event of a schedule corresponding to the group. In some embodiments, the second jump control is displayed on the group chat interface. The second jump control is configured to jump to the schedule detail interface of the target schedule in response to being triggered.

In some embodiments, the terminal may further display an account selection interface, wherein the account selection interface is configured to display the plurality of accounts and at least one associated account, in which the associated account does not belong to the target group, but is associated with at least one account of the plurality of accounts. The terminal sends first invitation information and second invitation information to the associated account in response to a select operation for the associated account. The first invitation information is configured to instruct the associated account to join the target group. The second invitation information is configured to instruct the associated account to participate in the schedule event corresponding to the target schedule. In some embodiments, the association relationship is a friendship. Correspondingly, prior to displaying the account selection interface, the terminal acquires accounts each having a friendship with account of the plurality of account as associated accounts, and then displays the associated account on the account selection interface in different groups, wherein each of the groups displays the associated account having the friendship with one account of the plurality of accounts. The terminal may alternatively acquire accounts having a friendship with a current login account of the terminal as the associated accounts, and then display the accounts having the friendship with the current login account of the terminal. In some embodiments, the association relationship is a colleague relationship. Correspondingly, prior to displaying the account selection interface, the terminal acquires accounts belonging to a same company as the plurality of accounts as associated accounts, and then displays the associated account belonging to the same company as the plurality of accounts on the account selection interface based on an organizational structure of the company.

For example, the target group is a discussion group of project A, a plurality of accounts in the target group belong to an identical company, and the association relationship is a colleague relationship. Prior to displaying the account selection interface, the terminal acquires accounts belonging to an identical company as the plurality of accounts as associated accounts, and then displays the associated account on the account selection interface based on an organizational structure of the company. The organizational structure may include a sales department, a research and development department, a personnel department, a logistics department, and the like. This is not limited in the embodiments of the present disclosure.

In some embodiments, the user can choose whether to send the second invitation information to the associated account. The terminal sends the second invitation information to the associated account in response to receiving an instruction for sending the second invitation information. The second invitation information is displayed on a system notification interface of the associated account in a form of a system notification, or on the group chat interface of the target group in a form of a notification card, or on a to-do event interface of the associated account in a form of a to-do event. The to-do event interface is configured to display at least one to-do event. This is not limited in the embodiments of the present disclosure.

For example, referring to FIG. 6, the second invitation information is displayed on the group chat interface in the form of the notification card. The user can participate in the schedule event by clicking on the notification card.

The account selection interface is provided, such that a new account can be further added to the target group, and the added account can be instructed to participate in the schedule event corresponding to the target schedule. Therefore, the steps of inviting a user to join a group and inviting the user to participate in a schedule event are combined into one step, which reduces a quantity of operation steps, and improves the efficiency of human-computer interaction.

In some embodiments, in order to further improve utilization of a group, the terminal may further detect whether a duplicate group exists when creating a group, wherein the duplicate group includes the above plurality of accounts. The terminal creates the target group in response to absence of the duplicate group; or displays prompt information in response to existence of the duplicate group, wherein the prompt information is configured to prompt whether to reuse the duplicate group. In some embodiments, the duplicate group includes only the plurality of accounts, that is, the accounts included in the duplicate groups are in one-to-one correspondence with the plurality of accounts. In some embodiments, the duplicate group further includes another account in addition to the above plurality of accounts. The user can determine whether to reuse the duplicate group according to actual requirements. In some embodiments, the terminal may further prompt whether to reuse the candidate group in the above prompt information in response to detecting that the candidate group includes accounts that exceed a target proportion of the plurality of accounts.

For example, the plurality of accounts include account A, account B, account C, and account D. In the case that the terminal detects that group 1 includes account A, account B, account C, account D, account E, and account F, that group 2 includes account A, account B, account C, and account D, and that group 3 includes account B, account C, and account D, the terminal determines group 1 and group 2 as duplicate groups, and determines group 3 as a candidate group. Then, the terminal displays "Whether to reuse group 1," "Whether to reuse group 2," and "Whether to reuse group 3" in the prompt information.

In some embodiments, the terminal establishes an association relationship between a group identifier of the duplicate group and the schedule identifier of the target schedule in response to a reuse operation of the above prompt information, and displays the third jump control on the group chat interface of the duplicate group. The third jump control is configured to jump to the schedule detail interface of target schedule in response to being triggered. The terminal creates the target group in response to a non-reuse operation of the above prompt information. Whether the duplicate group exists is detected, such that the duplicate group can be reused effectively, thereby improving utilization efficiency of the duplicate group, and reduce consumption of system resources.

In some embodiments, the terminal can further display the schedule detail interface of the target schedule. Target schedule information and a first jump control are displayed on the schedule detail interface. The terminal displays the group chat interface of the target group in response to a trigger operation on the first jump control. The first jump control is disposed on the schedule detail interface, such that the user can perform seamless switching between the target schedule and the target group, eliminating the steps of exiting a schedule detail interface to search a corresponding group, and entering the group, thereby improving human-computer interaction efficiency.

For example, FIG. 7 is a schematic diagram of a schedule detail interface according to some embodiments of the present disclosure. As shown in FIG. 7, a schedule name, start time and end time of a schedule, a location of a conference room, reminder time, and other schedule information are displayed on the schedule detail interface, and a first jump control is further displayed on the schedule detail interface.

According to the method in the embodiments of the present disclosure, the group create control is provided on the schedule creation interface, such that when creating a schedule, a user can create a group associated with the schedule through the group create control, eliminating the step of creating a group for a plurality of accounts participating in a schedule event corresponding to the schedule upon creation of the schedule, and improving the efficiency of creating a group.

All the above optional technical solutions may be applied in any combination to form an optional embodiment of the present disclosure. Details are not described herein again.

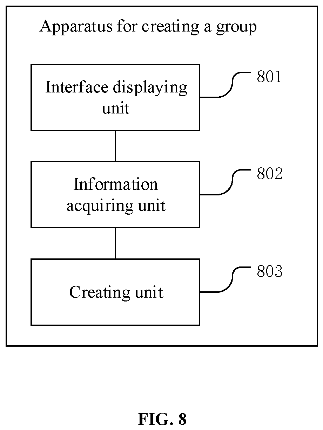

FIG. 8 is a block diagram of an apparatus for creating a group according to an embodiment of the present disclosure. Referring to FIG. 8, the apparatus for creating a group includes an interface displaying unit 801, an information acquiring unit 802, and a creating unit 803.

The interface displaying unit 801 is configured to display a schedule creation interface. A schedule create control is displayed on the schedule creation interface and is configured to instruct to create a schedule, and a group create control is displayed on the schedule creation interface and is configured to instruct to create a group corresponding to the schedule in response to creating the schedule and the group create control being in a triggered state.

The information acquiring unit 802 is configured to display target schedule information on the schedule creation interface. The target schedule information includes a plurality of accounts participating in a schedule event.

The creating unit 803 is configured to create a target schedule and a target group associated with the target schedule in response to a trigger operation on the schedule create control and the group create control being in the triggered state. The target schedule indicates the schedule event in which the plurality of accounts participate. The target group includes the plurality of accounts.

According to the apparatus in the embodiments of the present disclosure, the group create control is provided on the schedule creation interface, such that when creating a schedule, a user can create a group associated with the schedule through the group create control, eliminating the step of creating a group for a plurality of accounts participating in a schedule event corresponding to the schedule upon creation of the schedule, and improving the efficiency of creating a group.

In some embodiments, the creating unit 803 includes:
a schedule creating sub-unit, configured to create the target schedule, wherein a first jump control is displayed on a schedule detail interface of the target schedule and is configured to jump to a group chat interface of the target group in response to being triggered; and
a group creating sub-unit, configured to create the target group, wherein a second jump control is displayed on the group chat interface of the target group and is configured to jump to the schedule detail interface of the target schedule in response to being triggered.

In some embodiments, the creating unit 803 is further configured to: determine a schedule identifier of the target schedule and a group identifier of the target group; and establish a correspondence between the schedule identifier and the group identifier.

In some embodiments, the group creating sub-unit is configured to: determine a quantity of the plurality of accounts; and create the target group including the plurality of accounts in response to the quantity being not less than a quantity threshold, wherein the quantity threshold is a positive integer not less than 3.

In some embodiments, the group creating sub-unit is configured to create the target group in response to absence of a duplicate group, wherein the duplicate group includes the above plurality of accounts, and display prompt information in response to existence of the duplicate group, wherein the prompt information is configured to prompt whether to reuse the duplicate group.

In some embodiments, the group creating sub-unit is further configured to: create the target group in response to a non-reuse operation of the prompt information; or display a third jump control on the group chat interface of the duplicate group in response to a reuse operation of the prompt information, wherein the third jump control is configured to jump to the schedule detail interface of the target schedule in response to being triggered.

In some embodiments, the apparatus for creating the group further includes:
a first displaying unit 804, configured to display a schedule notification card on a group chat interface of the target group. The schedule notification card is configured to instruct the plurality of accounts to participate in the schedule event in which the target schedule instructs the plurality of accounts to participate.

In some embodiments, the apparatus for creating the group further includes:
a second displaying unit 805, configured to display a schedule detail interface of the target schedule in response to a trigger operation on the schedule notification card.

In some embodiments, the apparatus for creating the group further includes:
a third displaying unit 806, configured to display an account selection interface, wherein the account selection interface is configured to display the plurality of accounts and at least one associated account, in which the associated account does not belong to the target group, associated with at least one account of the plurality of accounts; and
an information sending unit 807, configured to send first invitation information and second invitation information to the associated account in response to a select operation for the associated account, wherein the first invitation information is configured to instruct the associated account to join the target group, and the second invitation information is configured to instruct the associated account to participate in the schedule event corresponding to the target schedule.

In some embodiments, the apparatus for creating the group further includes:
a fourth displaying unit 808, configured to display a schedule detail interface of the target schedule, wherein the target schedule information and a first jump control are displayed on the schedule detail interface; and
a fifth displaying unit 809, configured to display a group chat interface of the target group in response to a trigger operation on the first jump control.

It should be noted that the apparatus for creating the group in the above embodiments is illustrated only by the division of each of the foregoing functional units in the case of creating a group. In practice, the foregoing functions may be allocated to different functional units as required. That is, the internal structure of the electronic device is divided into different functional units, to complete all or some of the functions described above. In addition, the apparatus for creating a group in the above embodiments belongs to the same concept as the method for creating a group in the above embodiments. The specific implementation process of the apparatus is detailed in the method embodiments, which are not repeated herein.

With regard to the apparatus in the above embodiments, the specific fashion in which the respective modules perform the operations described in detail in the embodiments of the method, and will not be explained in detail herein.

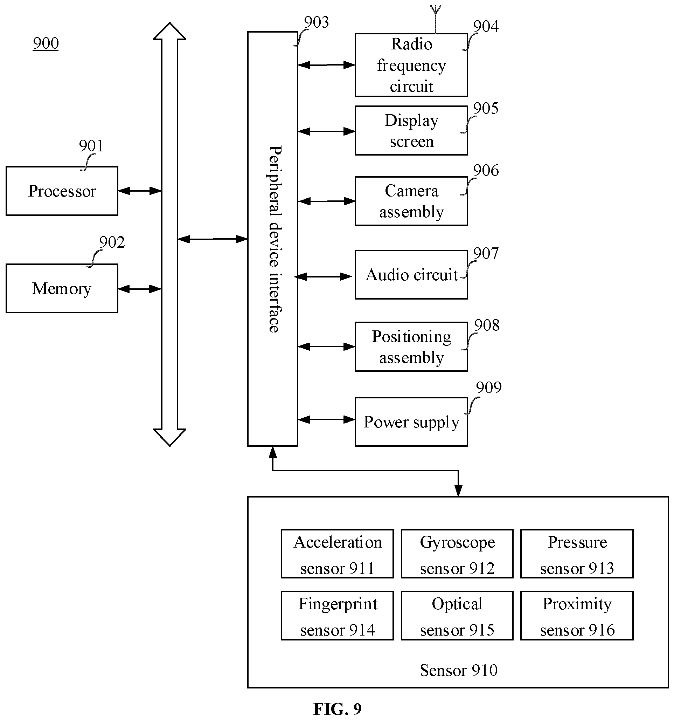

In the case that the electronic device is provided as a terminal, FIG. 9 shows a structural block diagram of a terminal 900 according to some embodiments of the present disclosure. The terminal 900 may be: a smart phone, a tablet computer, a moving picture experts group audio layer III (MP3) player, a moving picture experts group audio layer IV (MP4) player, a laptop or desktop computer. The terminal 900 may also be referred to with other names such as user equipment, a portable terminal, a laptop terminal, a desktop terminal.

Generally, the terminal 900 includes: a processor 901 and a memory 902.

The processor 901 may include one or more processing cores, such as a quad-core processor, or an eight-core processor. The processor 901 may be implemented in at least one hardware form of digital signal processing (DSP), a field-programmable gate array (FPGA), programmable logic array, and a programmable logic array (PLA). The processor 901 may also include a main processor and a co-processor. The main processor is configured to process data in an awake state, and is also called a central processing unit (CPU), and the co-processor is a low-power processor configured to process data in a standby state. In some embodiments, the processor 901 may be integrated with a graphics processing unit (GPU), which is configured f to render and draw contents to be displayed by a display screen. In some embodiments, the processor 901 may further include an artificial intelligence (AI) processor, which is configured to process operations related to machine learning.

The memory 902 may include one or more computer-readable storage medium, which may be non-transitory. The memory 902 may further include a high-speed random-access memory, and a non-volatile memory, such as one or more magnetic disk storage devices, flash storage device. In some embodiments, a non-transitory computer-readable storage medium in the memory 902 is configured for storing at least one instruction, which is configured to be executed by the processor 901 to implement the method for creating a group according to embodiments of the present disclosure.

In some embodiments, the terminal 900 may further optionally include: a peripheral device interface 903 and at least one peripheral device. The processor 901, the memory 902 and the peripheral device interface 903 may be connected to each other via a bus or a signal line. Each of the peripheral devices may be connected to the peripheral device interface 903 via a bus, a signal line or a circuit board. Specifically, the peripheral device includes: at least one of a radio-frequency circuit 904, a display screen 905, a camera assembly 906, an audio circuit 907, a positioning assembly 908, and a power supply 909.

The peripheral interface 903 may be configured to connect at least one peripheral device related to I/O (Input/Output) to the processor 901 and the memory 902. In some embodiments, the processor 901, the memory 902 and the peripheral device interface 903 are integrated on the same chip or circuit board. In some other embodiments, any one or two of the processor 901, the memory 902 and the peripheral device interface 903 may be implemented on a separate chip or circuit board, which is not limited in the embodiments.

The radio frequency circuit 904 is configured to receive and transmit radio frequency (RF) signals, which are also called electromagnetic signals. The radio frequency circuit 904 communicates with a communication network and other communication devices via the electromagnetic signals. The radio frequency circuit 904 converts electric signals into electromagnetic signals for transmission, or converts received electromagnetic signals into electrical signals. In some embodiments, the radio frequency circuit 904 includes: an antenna system, an RF transceiver, one or more amplifiers, a tuner, an oscillator, a digital signal processor, a coding-decoding chipset, a user identity module card or the like. The radio frequency circuit 904 may communicate with other terminals via at least one wireless communication protocol. The wireless communication protocols include, but are not limited to: metropolitan area network, various generations of mobile communication channel networks (2G, 3G, 4G and. 5G), wireless local area network and/or a wireless fidelity (Wi-Fi) network. In some embodiments, the radio frequency circuit 904 may further include a circuit related to near-field communication (NFC), which is not limited in the present disclosure.

The display screen 905 is configured to display a user interface (UI). The UI may include graphics, texts, icons, videos, and any combination thereof. In the case that the display screen 905 is a touch screen, the display screen 905 further is capable of acquiring a touch signal on or over a surface of the display screen 905. The touch signal may be input as a control signal to the processor 901 for processing. At this point, the display screen 905 may also serve to provide virtual buttons and/or virtual keyboards, which are also referred to as soft buttons and/or soft keyboards. In some embodiments, the display screen 905 may be disposed at a front panel of the terminal 900. In other embodiments, at least two display screens 905 may be disposed on different surfaces of the terminal 900, or in a folded fashion. In other embodiments, the display screen 905 may be a flexible display screen disposed on a curved surface or a folded surface of the terminal 900. Furthermore, the display screen 905 may also be provided as an irregular shape other than rectangle, that is, an irregularly-shaped screen. The display screen 905 may be prepared with a liquid crystal display (LCD), an organic light-emitting diode (OLED) and other materials.

The camera assembly 906 is configured to capture images or videos. In some embodiments, the camera assembly 906 includes a front camera and a rear camera. Generally, the front camera is disposed on the front panel of the terminal, and the rear camera is disposed on a back surface of the terminal. In some embodiments, at least two rear cameras are disposed, i.e., a main camera, a field-depth camera, a wide-angle camera, and a telephoto camera, so as to realize the fusion of the main camera and the field-depth camera for background blurring function, the fusion of the main camera and the wide-angle camera for panoramic shooting and virtual reality (VR) shooting functions, or other fusion shooting functions. In some embodiments, the camera assembly 906 may further include a flashlight. The flashlight may be a single-color-temperature flashlight or a dual-color-temperature flashlight. The dual-color-temperature flashlight refers to a combination of a warm flashlight and a cold flashlight, which may provide light compensation for different color temperatures.

The audio circuit 907 may include a microphone and a speaker. The microphone is configured to collect sound waves from the users and environments, convert the sound waves into electrical signals, and input the electrical signals to the processor 901 for processing, or input the electrical signals to the radio frequency circuit 904 for voice communication. For the purpose of stereo acquisition or noise reduction, multiple microphones may be provided and disposed at different parts of the terminal 900. The microphone may be an array microphone or an omnidirectional acquisition microphone. The speaker is configured to convert the electrical signals from the processor 901 or the radio frequency circuit 904 into sound waves. The speaker may be a traditional thin-film speaker or a piezoelectric ceramic speaker. In the case that the speaker is a piezoelectric ceramic speaker, electrical signals may be converted into sound waves that are not only audible to humans, but also inaudible to humans for distance measurement and other purposes. In some embodiments, the audio circuitry 2307 may further include a headphone jack.

The positioning assembly 908 is configured to determine a current geographical position of the terminal 900 to implement navigation or location-based service (LBS). The positioning assembly 908 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power supply 909 is configured to supply power to each of the assemblies in the terminal 900. The power supply 909 may be AC, DC, disposable batteries or rechargeable batteries. In the case that the power supply 909 includes a rechargeable battery, the rechargeable battery may be charged in a wired mode or a wireless mode. The rechargeable battery may be further configured to support quick charge technology.

In some embodiments, the terminal 900 further includes one or more sensors 910. The one or more sensors 910 include, but are not limited to: an acceleration sensor 911, a gyroscope sensor 912, a pressure sensor 913, a fingerprint sensor 914, an optical sensor 915 and a proximity sensor 916.

The acceleration sensor 911 may detect magnitude of accelerations on three coordinate axes of a coordinate system established based on the terminal 900. For example, the acceleration sensor 911 may be configured to detect components of gravitational acceleration in the three axes. The processor 901 may control the display screen 905 to display a user interface in a lateral view or a vertical view based on gravitational acceleration signals captured by the acceleration sensor 911. The acceleration sensor 911 may further be configured to capture motion data of a game or a user.

The gyroscope sensor 912 may detect an orientation and a rotational angle of the body of the terminal 900. The gyroscope sensor 912 may capture 3D motions of a user on the terminal 900 in cooperation with the acceleration sensor 911. According to data acquired by the gyroscope sensor 912, the processor 901 may implement the following functions: motion sensing (such as changing the UI based on the user's tilt operation), image stabilization during shooting, game control, and inertial navigation.

The pressure sensor 913 may be provided at a side frame of the terminal 900 and/or on a layer under the display screen 905. In the case that the pressure sensor 913 is provided at the side frame of the terminal 900, a user's holding signal to the terminal 900 may be detected, and the processor 901 performs left/right hand recognition or a shortcut operation based on the signal of holding acquired by the pressure sensor 913. In the case that the pressure sensor 913 is disposed at the lower layer of the display screen 905, the processor 901 controls operable controls on the UI based on the user's press operation on the display screen 905. The operable controls include at least one of a button control, a scroll bar control, an icon control, and a menu control.

The fingerprint sensor 914 is configured to capture a user's fingerprint, and the user's identity is recognized by the processor 901 or by the fingerprint sensor 914 based on the captured fingerprint by the fingerprint sensor 914. In the case that the user's identity is recognized as trusted, the user is authorized by the processor 901 to perform related sensitive operations, such as unlocking the screen, viewing encrypted information, downloading software, paying and changing settings. The fingerprint sensor 914 may be disposed on the front surface, a rear surface or a side surface of the terminal 900. In the case that a physical button or a manufacturer's Logo is disposed on the terminal 900, the fingerprint sensor 914 may be integrated with the physical button or the manufacturer's Logo.

The optical sensor 915 is configured to capture intensity of ambient light. In one embodiment, the processor 901 may control displaying brightness of the display screen 905 based on the ambient light intensity captured by the optical sensor 915. Specifically, in the case that the ambient light intensity is high, the displaying brightness of the display screen 905 is increased, and the ambient light intensity is low, the displaying brightness of the display screen 905 is decreased. In another embodiment, the processor 901 may also dynamically adjust shooting parameters of the camera assembly 906 based on the intensity of ambient light captured by the optical sensor 915.

The proximity sensor 916, also referred to as a distance sensor, is generally provided at the front panel of the terminal 900. The proximity sensor 916 is configured to capture a distance between the user and the front surface of the terminal 900. In an embodiment, the processor 901 controls the display screen 905 to switch from a screen-on state to a screen-off state in response to the proximity sensor 916 detecting that the distance between the user and the front surface of the terminal 900 gradually decreases, and the processor 901 controls the display screen 905 to switch from the screen-off state to the screen-on state in response to the proximity sensor 916 detecting that the distance between the user and the front surface of the terminal 900 gradually increases.

Those skilled in the art may appreciate that, a structure shown in FIG. 9 does not constitute a limitation on the terminal 900, and more or fewer assemblies than those shown may be included, or some of assemblies may be combined, or different assembly arrangements may be provided.

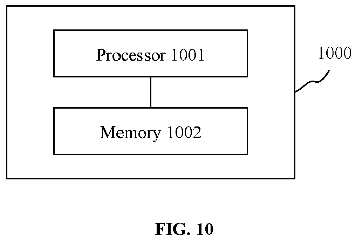

In the case that the electronic device is provided as a server, FIG. 10 is a structural block diagram of a server according to some embodiments of the present disclosure. Significant differences may be generated in the case that the server 1000 has different configurations or performances. The server 1000 may include one or more processors (CPU) 1001 and one or more memories 1002 stored with at least one piece of program code, and the at least one piece of program code, when loaded and executed by the one or more processors 1001, cause the one or more processors 1001 to implement the method for creating a group according to the foregoing method embodiments.

The server may further include components such as a wired or wireless network interface, a keyboard, and an input/output interface for input and output, and the server 1000 may further include other components for implementing device functions, which is not repeated here.

In some embodiments, a computer-readable storage medium including program codes is provided, such as including a memory 902 or 1002 including program codes. The program codes can be executed by the processor 901 of the terminal 900 or the processor 1001 of the server 1000 to perform the above methods.

In some embodiments, the computer-readable storage medium may be a read-only memory (ROM), a random-access memory (RAM), a compact-disc read-only memory (CD-ROM), a magnetic tape, a floppy disk, and an optical data storage device, etc.

In some exemplary embodiments, a computer program product including a computer program is provided. In the case that the computer program is executed, the above method for creating a group can be realized.

All the embodiments of the present disclosure can be executed separately or in combination with other embodiments, which shall be deemed to fall into the protection scope of the present disclosure.

## Claims

1. A method for creating a group, applicable to an electronic device, the method comprising:
displaying (S201) a schedule creation interface, wherein a schedule create control is displayed on the schedule creation interface and is configured to instruct to create a schedule, and a group create control is displayed on the schedule creation interface and is configured to instruct to create a group corresponding to the schedule in response to creating the schedule and the group create control being in a triggered state;
displaying (S202) target schedule information on the schedule creation interface, wherein the target schedule information comprises a plurality of accounts participating in a schedule event; and
creating (S203) a target schedule and a target group associated with the target schedule in response to a trigger operation on the schedule create control and the group create control being in the triggered state, wherein the target schedule indicates the schedule event in which the plurality of accounts participate, and the target group comprises the plurality of accounts.

2. The method according to claim 1, further comprising:
displaying a schedule detail interface of the target group, wherein the target schedule information and a first jump control are displayed on the schedule detail interface, and the first jump control is configured to jump to a group chat interface of the target group in response to being triggered; and
displaying the group chat interface of the target group in response to a trigger operation on the first jump control, wherein a second jump control is displayed on the group chat interface and configured to jump to the schedule detail interface of the target schedule in response to being triggered.

3. The method according to claim 2, further comprising:
determining a schedule identifier of the target schedule and a group identifier of the target group; and
establishing a correspondence between the schedule identifier and the group identifier.

4. The method according to claim 2, wherein said creating the target group comprises:
determining a quantity of the plurality of accounts; and
creating the target group comprising the plurality of accounts in response to the quantity being not less than a quantity threshold, wherein the quantity threshold is a positive integer not less than 3.

5. The method according to claim 4, wherein said creating the target group comprising the plurality of accounts comprises:
creating the target group in response to absence of a duplicate group, wherein the duplicate group is a group comprising a plurality of overlapping accounts with the plurality of accounts displayed on the schedule creation interface; or
displaying prompt information in response to existence of the duplicate group, wherein the prompt information is configured to prompt whether to reuse the duplicate group.

6. The method according to claim 5, further comprising:
creating the target group in response to a non-reuse operation of the prompt information; or
displaying a third jump control on the group chat interface of the duplicate group in response to a reuse operation of the prompt information, wherein the third jump control is configured to jump to the schedule detail interface of the target schedule in response to being triggered.

7. The method according to any one of claims 1 to 6, further comprising:
displaying a schedule notification card on a group chat interface of the target group, wherein the schedule notification card is configured to instruct the plurality of accounts to particulate in the schedule event in which the target schedule instructs the plurality of accounts to participate.

8. The method according to claim 7, further comprising:
displaying a schedule detail interface of the target schedule in response to a trigger operation on the schedule notification card.

9. The method according to any one of claims 1 to 6, further comprising:
displaying an account selection interface, wherein the account selection interface is configured to display the plurality of accounts and at least one associated account, in which the associated account does not belong to the target group, but is associated with at least one account of the plurality of accounts; and
sending first invitation information and second invitation information to the associated account in response to a select operation for the associated account, wherein the first invitation information is configured to instruct the associated account to join the target group, and the second invitation information is configured to instruct the associated account to participate in the schedule event corresponding to the target schedule.

10. The method according to any one of claims 1 to 6, further comprising:
displaying a schedule detail interface of the target schedule, wherein the target schedule information and a first jump control are displayed on the schedule detail interface; and
displaying a group chat interface of the target group in response to a trigger operation on the first jump control.

11. An apparatus for creating a group, comprising:
an interface displaying unit (801), configured to display a schedule creation interface, wherein a schedule create control is displayed on the schedule creation interface and is configured to instruct to create a schedule, and a group create control is displayed on the schedule creation interface and is configured to instruct to create a group corresponding to the schedule in response to creating the schedule and the group create control being in a triggered state;
an information acquiring unit (802), configured to display target schedule information on the schedule creation interface, wherein the target schedule information comprises a plurality of accounts participating in a schedule event; and
a creating unit (803), configured to create a target schedule and a target group associated with the target schedule in response to a trigger operation on the schedule create control and the group create control being in the triggered state, wherein the target schedule indicates the schedule event in which the plurality of accounts participate, and the target group comprises the plurality of accounts.

12. The apparatus according to claim 11, wherein the creating unit (803) comprises:
a schedule creating sub-unit, configured to create the target schedule, wherein a first jump control is displayed on a schedule detail interface of the target schedule and is configured to jump to a group chat interface of the target group in response to being triggered; and
a group creating sub-unit, configured to create the target group, wherein a second jump control is displayed on the group chat interface of the target group and is configured to jump to the schedule detail interface of the target schedule in response to being triggered,
especially, wherein the group creating sub-unit is configured to:
create the target group in response to absence of a duplicate group, wherein the duplicate group is a group comprising the plurality of accounts; or
display prompt information in response to existence of the duplicate group, wherein the prompt information is configured to prompt whether to reuse the duplicate group,
especially, wherein the group creating sub-unit is further configured to:
create the target group in response to a non-reuse operation of the prompt information; or
display a third jump control on the group chat interface of the duplicate group in response to a reuse operation of the prompt information, wherein the third jump control is configured to jump to the schedule detail interface of the target schedule in response to being triggered.

13. The apparatus according to claim 11, further comprising:
a first displaying unit (804), configured to display a schedule notification card on a group chat interface of the target group, wherein the schedule notification card is configured to instruct the plurality of accounts to particulate in the schedule event in which the target schedule instructs the plurality of accounts to participate;
a second displaying unit (805), configured to display a schedule detail interface of the target schedule in response to a trigger operation on the schedule notification card.

14. The apparatus according to claim 11, further comprising:
a third displaying unit (806), configured to display an account selection interface, wherein the account selection interface is configured to display the plurality of accounts and at least on associated account, in which the associated account does not belonging to the target group, but is associated with at least one account of the plurality of accounts; and
an information sending unit (807), configured to send first invitation information and second invitation information to the associated account in response to a select operation for the associated account, wherein the first invitation information is configured to instruct the associated account to join the target group, and the second invitation information is configured to instruct the associated account to participate in the schedule event corresponding to the target schedule.

15. A non-transitory computer-readable storage medium storing at least one instruction therein, wherein the at least one instruction, when executed by a processor of an electronic device, causes the electronic device to perform the method for creating a group according to any of claims 1-10.
